(19) Europäisches Patentamt
European Patent Office
Office européen des brevets

(11) Publication number: **0 130 056**
**A1**

(12) # EUROPEAN PATENT APPLICATION

(21) Application number: 84304211.0

(22) Date of filing: 21.06.84

(51) Int. Cl.[4]: C 08 G 61/10

(30) Priority: 24.06.83 GB 8317169

(43) Date of publication of application: 02.01.85 Bulletin 85/1

(84) Designated Contracting States: AT BE DE FR GB NL

(71) Applicant: The British Petroleum Company p.l.c.
Britannic House Moor Lane
London EC2Y 9BU(GB)

(72) Inventor: Brown, Peter John Nicholas
The British Petroleum Company p.l.c. Chertsey Road
Sunbury-on-Thames Middlesex, TW16 7LN(GB)

(74) Representative: Krishnan, Suryanarayana Kalyana et al,
c/o The British Petroleum Company plc Patents Division
Chertsey Road
Sunbury-on-Thames Middlesex TW16 7LN(GB)

(54) **Fluorinated polyphenylenes.**

(57) The present invention relates to fluorinated polyphenylenes which have at least four benzene nuclei in the polymer chain and contains at least one unsubstituted benzene nucleus. Such polymers may be produced by condensation of fluorinated benzenes with lithiated benzenes. The polymers may be used as conducting polymers, photoconductors, high temperature engineering polymers, solid lubricants, heat and light stabilizers, oxidation inhibitors and precursors for graphite type fibres.

EP 0 130 056 A1

Croydon Printing Company Ltd

## FLUORINATED POLYPHENYLENES

The present invention relates to novel fluorinated polyphenylenes and to a process for producing them.

Production of polyphenylenes by catalytic polymerisation of benzene is well known. The polymerisation is usually effected in the presence of a catalyst comprising a strong Lewis acid and an oxidising agent. It has also been known to produce polyphenylenes by the addition of an aryl Grignard or an aryllithium to a substituted cyclic ketone followed by dehydration and aromatisation. However, most of these processes give rise to relatively unstable or intractable products. It is also known from Aroskar E.V. et al in J.C.S. (C) p1569, (1968) that charge transfer complexes may be formed between aromatic hydrocarbon and fluorocarbon rings.

It has now been found that by forming a polymer in which the phenylene and fluorinated phenylene groups are present in a mixed distribution, a relatively stable product is produced.

Accordingly, the present invention is a fluorinated phenylene polymer having at least four benzene nuclei in the polymer chain at least one of which is a fluorinated benzene nucleus.

According to a further embodiment the present invention is a fluorinated phenylene polymer having at least four benzene nuclei in the polymer chain, said polymer containing at least one unsubstituted benzene nucleus and at least one fluorinated benzene nucleus.

According to yet another embodiment the present invention is a fluorinated phenylene polymer of the formula (I)

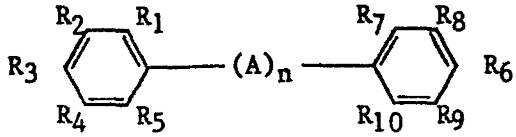

(I)

wherein $R_1$, $R_2$, $R_4$ and $R_5$ are identical radicals selected from H and F, $R_7$, $R_8$, $R_9$, $R_{10}$ are identical radicals selected from H and F,

$R_3$ and $R_6$ are identical or different radicals selected from H, a halogen and lithium,

n is an integer from 1 to 50, and

A is a group of the formula (II)

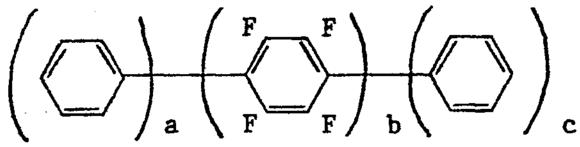

(II)

in which a = 0 to 5

b = 1 to 10

c = 0 to 5

such that a + b + c = at least 2

Specific examples of the fluorinated phenylene polymers according to the present invention include

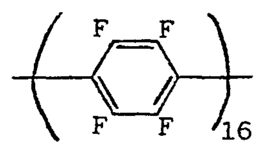

(III)

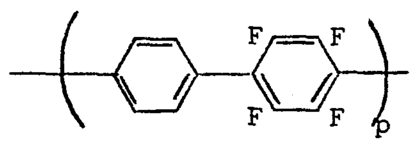

(IV)

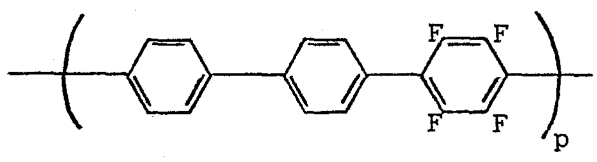

(V)

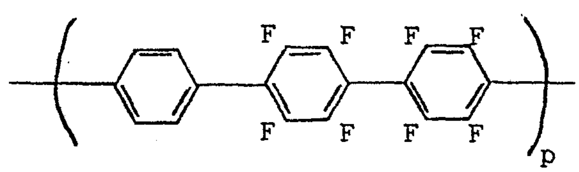

(VI)

in which p is an integer from 2 to 50.

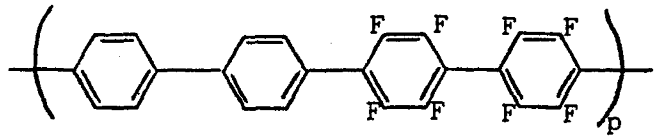 (VII)

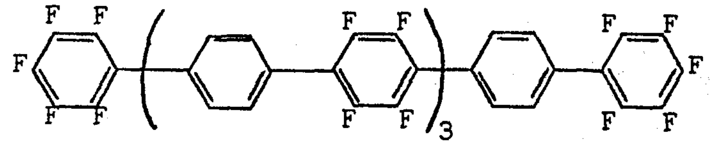 (VII)

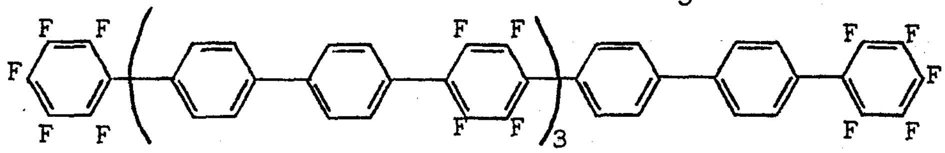 (IX)

The fluorinated phenylene polymers of the present invention preferably have at least 5 benzene nuclei and may be produced in various ways depending upon the reactants used and the products desired.

The starting materials used may be reacted in single steps to produce the polymer or the polymerisation may be carried out "step wise".

By "single step" polymerisation is meant a process in which one or more reactants from

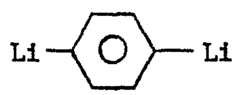 —— (X),

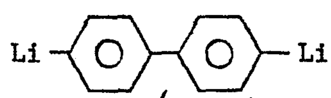 —— (XI)

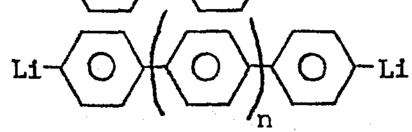 —— (XII)

wherein n is an integer from 1 to 50

and 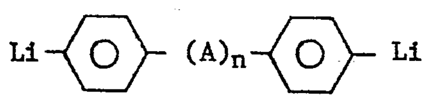 (XIII)

in which $(A)_n$ has the same notation as in formula (I) above, is reacted with one or more of

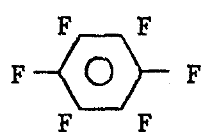 —— (XIV),

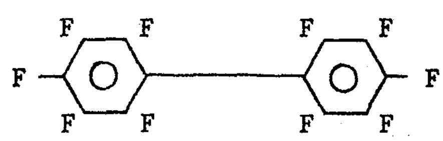 —— (XV)

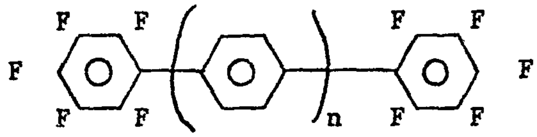 (XVI)

wherein n is an integer from 1 to 50

and 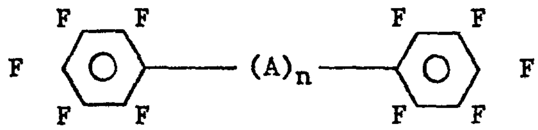 (XVII)

in which the group $(A)_n$ is the same as in formula (I) above.

Alternatively, one or more of the compounds of formula (XVIII) to (XX)

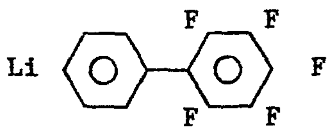 (XVIII)

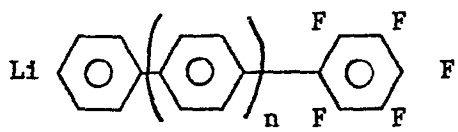 (XIX)

where n is an integer from 1 to 50

and 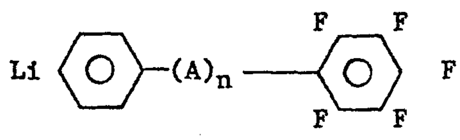 (XX)

in which $(A)_n$ is the same as before in formula (I) are condensed together with the elimination of LiF to form the desired polymer.

In the other method of "step wise" polymerisation, one or more compounds of the formulae (XXI) to (XXIV)

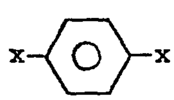 (XXI),

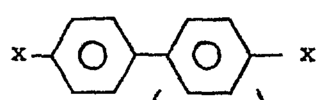 (XXII) and

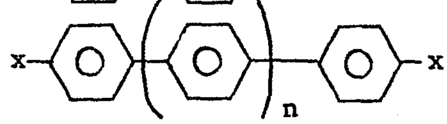 (XXIII)

where n is an integer from 1 to 50

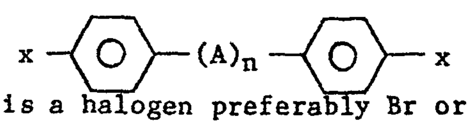 (XXIV)

where x is a halogen preferably Br or I

is converted to a corresponding half lithiated derivative and then reacted with one or more of the compounds illustrated in formulae (XIV) - (XVII) above.

Whether the polymer is produced by a single step reaction or by step wise polymerisation, it is preferable to carry out the reaction with a solvent present. The solvent used is preferably inert under the reaction conditions and may be selected from tetrahydrofuran, diethylether and the like.

The reaction is preferably carried out at a temperature from -100 to +100°C, more preferably from -70 to +70°C. The products of the reaction may be washed with water and recovered thereafter by removal of the solvent.

The products so produced may have phenyl or halophenyl end groups or a lithophenyl end group if washing with water is excluded. Such products may be further reacted with known reagents to introduce desired functional or other groupings using standard techniques for reacting halophenyls or lithiophenyls.

Polymers produced in this manner have inherent electrical properties although in some cases this may not be noticeable to any significant extent. The polymers of the present invention may however be doped using conventional dopants such as the halogens, fluorides of arsenic, halides of molybdenum or protonic acids to enhance their conducting properties.

The polymers of the present invention may be produced in film or powder form and therefore find wide applicability in uses needing stable, conducting polymers.

The polymers and polymerisation process of the present invention are further illustrated with reference to the accompanying Examples. In all the Examples, the alphabetical notations used in the spectroscopic data have the following significance: w = weak, m = medium, s = strong, vs = very strong, b = broad and sh = shoulder.

Example 1

4,4'-Dibromodiphenyl (XXII) (x = Br) (6.24g) and dry tetrahydrofuran (17 ml) were stirred under a dry nitrogen atmosphere

and cooled to -66°C. 1.55 M n-butyllithium in hexane (25.8 ml) was added dropwise to the cold dibromodiphenyl with stirring. The reaction mixture, still under an atmosphere of dry nitrogen, was warmed to 0°C during 1 hour. Neat hexafluorobenzene (XIV) (3.72g) was added dropwise to the reaction mixture with stirring during 5 minutes. The reaction mixture was then boiled under reflux for 2.5 hours. The mixture was then cooled.

Water (150 ml) and diethyl ether (150 ml) were then added to the cold reaction mixture and the resultant mixture was well shaken. The ether layer, containing suspended solids, was separated and washed with water (2 x 50 ml). The ether layer was then filtered to give a solid which was then added to a further volume (50 ml) of ether and stirred before finally filtering and drying the solid product (6.9g); melting point greater than 300°C.

Mass spectrometry of the solid product showed the presence of a range of molecules corresponding to the structures having increasing molecular weight up to that of

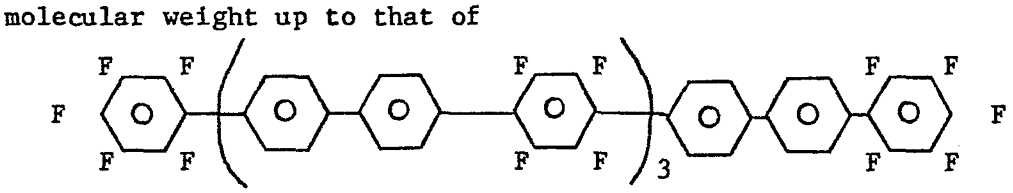

with peaks at M/z 486, M/z 786, M/z 1086 and M/z 1386, the spectrum being limited at this point by the lack of volatility of the sample. Infra-red spectroscopy showed major peaks at 1469 (vs), 1390 (s), 1313 (m) sharp, 1125 (m) sharp, 1065 (m) sharp, 1005 (ms) sharp, 978 (s) and 820 (s) $cm^{-1}$. Raman bands were observed at the following wave number values; 403 (s), 441 (w), 509 (mw), 652 (w), 772 (mw), 831 (mw), 911 (w), 1162 (w), 1194 (m), 1222 (sh), 1284 (m), 1365 (w), 1398 (m), 1606 (vs) and 1646 (m) $cm^{-1}$. The solid product was substantially insoluble in water, diethyl ether, acetone, methanol, petroleum ether (bp 40-60°C), tetrahydrofuran, p-dioxane, N,N-dimethyl formamide, dimethyl sulphoxide, 1-methyl-2-pyrrolidone, chloroform, carbon tetrachloride, benzene, toluene, chlorobenzene, pyridine and ethyl acetate.

<u>Example 2</u>

1.55 M n-butyllithium in hexane (25.8 ml) was added dropwise

during 5 minutes to p-dibromobenzene (XXI) (x = Br) (4.72g) in dry diethyl ether (26 ml) with stirring at room temperature under an atmosphere of dry nitrogen. The mixture was boiled still under the nitrogen atmosphere, under reflux for 2.75 hours. The mixture was then cooled to room temperature and then mixed with hexafluorobenzene (XIV) (3.72g) added dropwise during 5 minutes with stirring. The resultant mixture was then boiled under reflux for 1 hour. Diethyl ether (25 ml) was then added to the mixture and boiled for a further 1 hour under reflux. The mixture was then cooled.

Water (150 ml) and diethyl ether (125 ml) were then added to the cold reaction mixture and then well shaken. The ether layer, containing suspended solids, was separated and washed with water (2 x 50 ml). The washed ether layer was then filtered to give a solid which was resuspended in a fresh charge of ether (50 ml) and stirred well before finally filtering and drying to give a solid product (1.1g), m.p. greater than 300°C.

Mass spectrometry of the final product showed the presence of a range of molecules corresponding to structures of molecular weight increasing up to that of

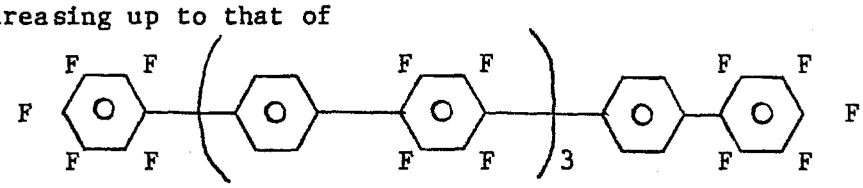

with peaks at M/z 634, M/z 858 and M/z 1082, the spectrum being limited at this point by the lack of volatility of the sample. Infrared spectroscopy showed major peaks at 1520 (wm), 1489 (ms), 1465 (ms), 1400 (s) sharp, 1313 (ms), 1071 (s), 975 (vs), 840 (m) and 820 (s) $cm^{-1}$. Raman bands were observed at the following wave number values; 1060, 1182, 1203, 1393 and 1598 $cm^{-1}$: only the strongest bands were observed owing to strong fluorescence. The solid product was substantially insoluble in water, diethyl ether, acetone, methanol, petroleum ether (bp 40-60°C), tetrahydrofuran, p-dioxane, N,N-dimethylformamide, dimethyl sulphoxide, 1-methyl-2-pyrrolidone, chloroform, carbon tetrachloride, benzene, toluene, chlorobenzene, pyridine and ethyl acetate.

Example 3

4,4'-Dibromodiphenyl (XXll) (x = Br) (3.12 g) and dry tetrahydrofuran (8.5 ml) were stirred under a dry nitrogen atmosphere and cooled to -73°C. 1.55 M n-butyllithium in hexane (12.9 ml) was added dropwise to the cold dibromodiphenyl with stirring. The reaction mixture, still under an atmosphere of dry nitrogen, was warmed to 0°C during 1.5 hours. A solution of decafluorodiphenyl (XV) (3.34 g) in dry tetrahydrofuran (5 ml) was added dropwise to the reaction mixture with stirring during 5 minutes. The reaction mixture was then boiled under reflux for 3.5 hours. The mixture was then cooled.

Water (150 ml) and diethyl ether (150 ml) were then added to the cold reaction mixture and the resultant mixture was well shaken. The ether layer, containing suspended solids, was separated and washed with water (3 x 50 ml). The ether layer was then filtered to give a solid which was then added to a further volume (50 ml) of ether and stirred before finally filtering and drying the solid product (4.3 g), m.p. greater than 300°C. Mass spectrometry of the solid product showed the presence of a range of molecules corresponding to the structures having increasing molecular weight up to that of

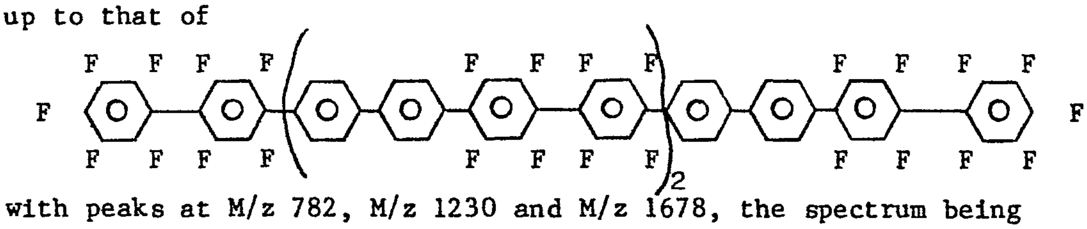

with peaks at M/z 782, M/z 1230 and M/z 1678, the spectrum being limited at this point by the lack of volatility of the sample.

Infrared spectroscopy showed major peaks at 1522 (wm), 1500 (w, sh), 1465 (s), 1390 (mb), 1290 (m), 995 (m), 969 (s), 830 (mb) and 720 (s) $cm^{-1}$. Raman bands were observed at the following wave number values; 399 (s), 505 (w), 654 (w), 739 (w), 830 (w), 1191 (m), 1280 (m), 1412 (m), 1602 (s) and 1645 (m) $cm^{-1}$.

Example 4

1.55 M n-butyllithium in hexane (12.9 ml) was added dropwise during 5 minutes to p-dibromobenzene (XXl) (x = Br) (2.36 g) in dry diethyl ether (13 ml) with stirring at room temperature under an

atmosphere of dry nitrogen. The mixture was boiled still under the nitrogen atmosphere, under reflux for 2.75 hours. The mixture was then cooled to room temperature and then mixed with a solution of decafluorodiphenyl (XV) (3.34 g) in dry diethyl ether (5 ml) added dropwise during 5 minutes with stirring. The resultant mixture was then boiled under reflux for 4 hours. The mixture was then cooled.

Water (200 ml) and diethyl ether (150 ml) were then added to the cold reaction mixture and then well shaken. The ether layer, containing suspended solids, was separated and washed with water (3 x 100 ml). The washed ether layer was then filtered to give a solid which was resuspended in a fresh charge of ether (50 ml) and stirred well before finally filtering and drying to give a solid product (1.2 g), m.p. greater than 300°C. Mass spectrometry of the solid product showed the presence of a range of molecules corresponding to the structures having increasing molecular weight up to that of

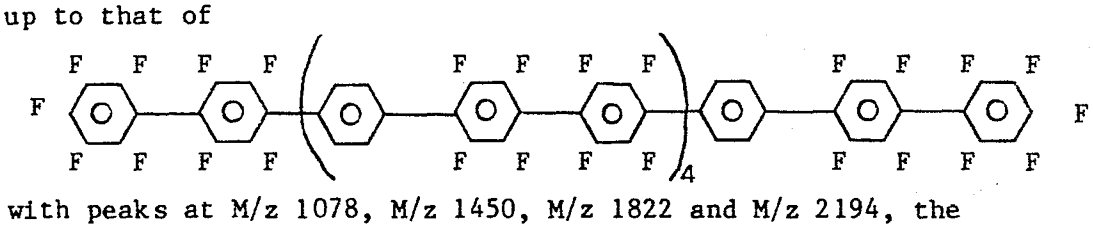

with peaks at M/z 1078, M/z 1450, M/z 1822 and M/z 2194, the spectrum being limited at this point by the lack of volatility of the sample. Infrared spectroscopy showed major peaks at 1532 (m), 1495 (mw), 1468 (s), 1400 (s sharp), 1290 (s), 1120 (s), 992 (s), 968 (vs), 845 (s) and 721 (vs) $cm^{-1}$. Raman bands were observed at the following wave number values; 384 (msh), 398 (s), 439 (w), 505 (m), 580 (w), 685 (w), 1064 (w), 1180 (w), 1198 (w), 1278 (w), 1411 (w), 1434 (w), 1584 (wm), 1601 (w) and 1649 (m) $cm^{-1}$.

Fluorinated and partly fluorinated poly(phenylenes) have potential uses in many fields including conducting polymers, photoconductors, high temperature engineering polymers, solid lubricants, lubricant additives, oxidation inhibitors, heat and light stabilizers and as precursors for graphite-type fibres.

Claims:

1. A fluorinated phenylene polymer having at least four benzene nuclei in the polymer chain at least one of which is a fluorinated benzene nucleus.

2. A fluorinated phenylene polymer according to claim 1 said polymer having at least four benzene nuclei in the polymer chain, said polymer containing at least one unsubstituted benzene nucleus and at least one fluorinated benzene nucleus.

3. A fluorinated phenylene polymer according to claim 1 or 2 said polymer having the formula (I)

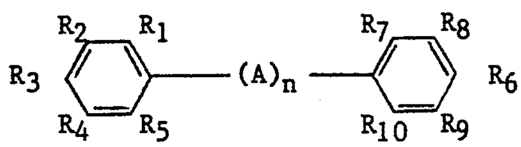

(I)

wherein $R_1$, $R_2$, $R_4$ and $R_5$ are identical radicals selected from H and F, $R_7$, $R_8$, $R_9$, $R_{10}$ are identical radicals selected from H and F,

$R_3$ and $R_6$ are identical or different radicals selected from H, a halogen and lithium,

n is an integer from 1 to 50, and

A is a group of the formula (II)

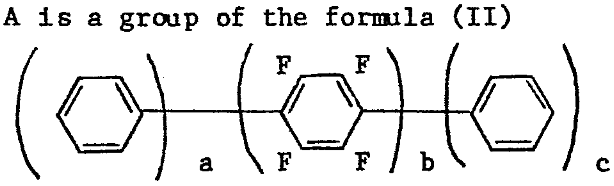

(II)

in which $a = 0$ to 5

$b = 1$ to 10

$c = 0$ to 5

such that $a + b + c =$ at least 2

4. A process for producing fluorinated phenylene polymers having at least four benzene nuclei in the polymer chain at least one of which is a fluorinated benzene nucleus said process comprising reacting one or more reactants from

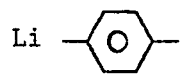 —— (X)

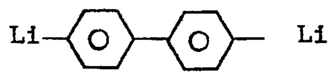 —— (XI)

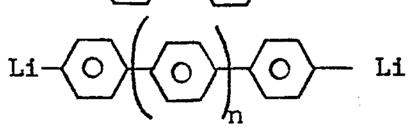 —— (XII)

wherein n is an integer from 1 to 50

and 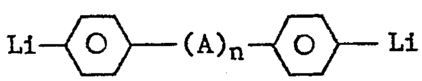 (XIII)

in which $(A)_n$ has the same notation as in formula (I) above, with one or more of

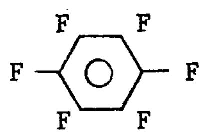 —— (XIV),

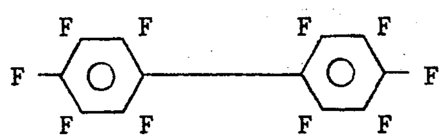 — (XV)

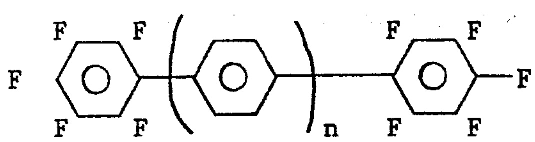 —— (XVI)

wherein n is an integer from 1 to 50

and 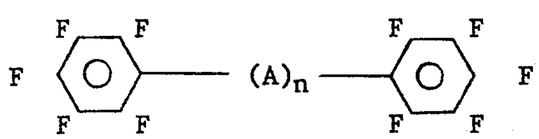 —— (XVII)

in which the group $(A)_n$ is the same as in formula (I) above in the presence of a solvent inert under the reaction conditions and at a temperature from -100°C to +100°C.

5. A process for producing fluorinated phenylene polymers having at least four benzene nuclei in the polymer chain at least one of which is a fluorinated benzene nucleus said process comprising reacting in a condensation reaction one or more of the compounds of formula (XVIII) to (XX)

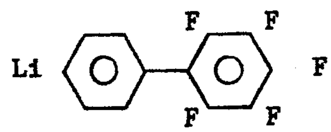

——(XVIII)

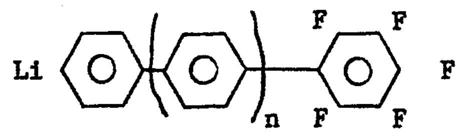

——(XIX)

where n is an integer from 1 to 50

and 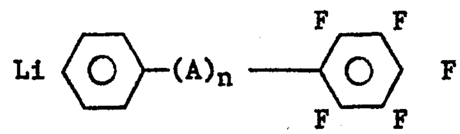

——(XX)

in which $(A)_n$ is the same as before in formula (I) in the presence of a solvent inert under the reaction conditions and at a temperature from -100°C to +100°C with the elimination of LiF to form the polymer.

6. A process for producing fluorinated phenylene polymers having at least four benzene nuclei in the polymer chain at least one of which is a fluorinated benzene nucleus said process comprising reacting "step wise" one or more compounds of the formulae (XXI) - (XXIV)

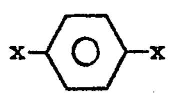

(XXI),

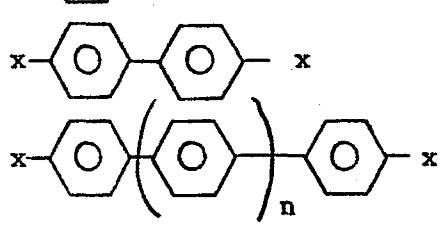

(XXII) and

(XXIII)

where n is an integer from 1 to 50

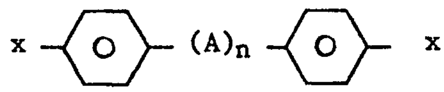 ——(XXIV)

where x is a halogen preferably Br or I and $(A)_n$ has the same significance as in Claim 3 so as to convert the said compounds into the corresponding half lithiated derivative and then reacting the half lithiated derivatives with one or more of the compounds illustrated in formulae (XIV) - (XVII) in claim 4.

**7.** A process according to any one of the preceding claims 4 to 6 wherein the solvent is selected from tetrahydrofuran and diethyl ether.

**8.** A process according to any one of the preceding claims 4 to 7 wherein the reaction is carried out at a temperature from -70 to +70°C.

**9.** Polyfluorophenylenes according to claims 1 to 3 as hereinbefore described with reference to the Examples.

**10.** A process for producing polyfluorophenylenes according to claims 4 to 8 as hereinbefore described with reference to the Examples.

European Patent Office

# EUROPEAN SEARCH REPORT

0130056
Application number

EP 84 30 4211

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 536 636 (C. TAMBORSKI)<br>* Claims; examples *<br>--- | 1,3,5,7,8 | C 08 G 61/10 |
| X | GB-A-1 052 482 (IMPERIAL CHEMICAL INDUSTRIES LTD.)<br>* Example 1 *<br>--- | 1,3 | |
| A | GB-A-1 004 636 (IMPERIAL CHEMICAL INDUSTRIES LTD.)<br>* Claims 1-3 *<br>--- | | |
| A | FR-A-1 270 472 (ARTRITE RESINS LTD.)<br>* Examples 1, 2, 4 *<br>----- | 4,6-8 | |
| | | | TECHNICAL FIELDS SEARCHED (Int. Cl. 3) |
| | | | C 08 G 61/00 |

The present search report has been drawn up for all claims

| Place of search | Date of completion of the search | Examiner |
|---|---|---|
| BERLIN | 14-09-1984 | HASS C V F |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document